# FASCICULE DE BREVET EUROPEEN

(11) **EP 2 553 840 B1**
(45) Date de publication et mention de la délivrance du brevet: **11.10.2017**
(21) Numéro de dépôt: 11715591.1
(22) Date de dépôt: 23.03.2011
(51) Int. Cl.: H04B 10/2575, H04Q 11/00

(54) **PROCEDE ET MODULE DE TRAITEMENT D'UNE DEMANDE DE TRANSMISSION D'UN SIGNAL RADIO DANS UN SYSTEME ROF**
VERFAHREN UND MODUL ZUR VERARBEITUNG EINER ANFRAGE ZUR ÜBERTRAGUNG EINES FUNKSIGNALS IN EINEM ROF-SYSTEM
METHOD AND MODULE FOR PROCESSING A REQUEST FOR TRANSMITTING A RADIO SIGNAL IN AN ROF SYSTEM

(30) Priorité: 30.03.2010 FR 1052356
(43) Date de publication de la demande: 06.02.2013
(73) Titulaire: Orange, 75015 Paris (FR)
(72) Inventeur: GUILLORY, Joffray, F-22000 Saint Brieuc (FR); MEYER, Sylvain, F-22160 Bulat Pestivien (FR)
(86) Numéro de dépôt international: PCT/FR2011/050617
(87) Numéro de publication internationale: WO 2011/121212

(56) Documents cités:
- EP-A1- 1 988 650
- US-A1- 2002 181 444
- US-A1- 2009 116 843

## Description

L'invention se situe dans le domaine des télécommunications, et plus particulièrement dans le domaine de la transmission radio au travers d'une fibre optique ou RoF (*Radio over Fiber*).

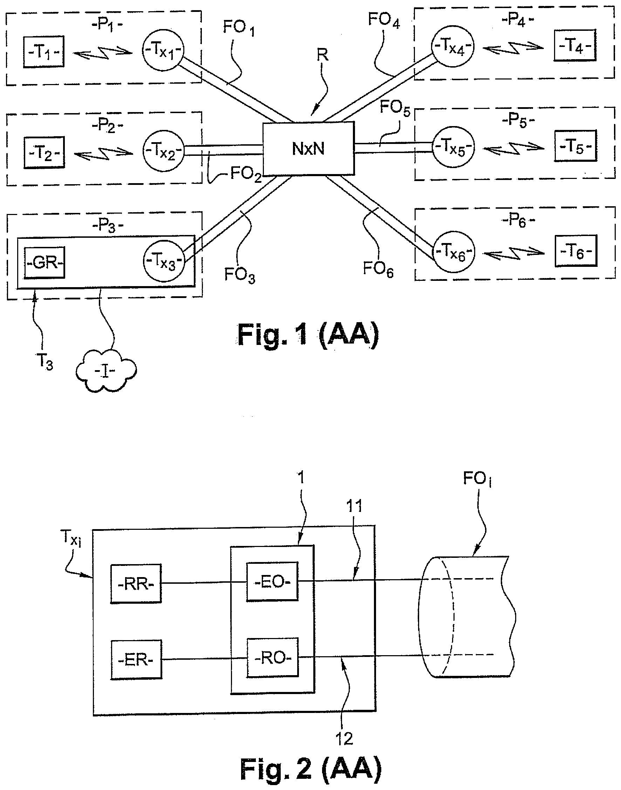

La **figure 1** représente un réseau optique R dans lequel un signal radio est transmis au travers d'une fibre optique.

Dans un tel réseau R, un premier module radio Tx₁ est connecté à une première extrémité d'une liaison optique FO₁ comprenant deux sections de fibre optique, chacune des sections de fibre optique étant associée à un sens de transmission d'un signal optique afin de permettre une transmission bidirectionnelle des données. Un tel module radio Tx₁ est situé dans une première pièce P1 d'un local domestique ou professionnel. Une deuxième extrémité de la liaison optique FO₁ est connectée à deux ports d'un coupleur optique passif NxN, où par exemple N = 6 comme représenté à la figure 1. Un tel coupleur optique permet de sommer les différents signaux optiques qu'il reçoit puis de diffuser cette sommation à tous les équipements qui lui sont connectés. Un terminal radio T₁, tel qu'un ordinateur personnel équipé de moyens d'émission/réception radio tels qu'un processeur ultra large bande UWB (*Ultra Wide Band*), est également disposé dans la pièce P1 et est apte à émettre un signal radio à destination du module radio Tx₁ et à recevoir un signal radio émis par le module radio Tx₁. Plusieurs terminaux radio Tₘ peuvent être connectés à un même module radio Txᵢ.

Un deuxième module radio Tx₂ est connecté à une première extrémité d'une liaison optique FO₂. Un tel module radio Tx₂ est situé dans une deuxième pièce P2 d'un local domestique ou professionnel. Une deuxième extrémité de la liaison optique FO₂ est connectée à deux ports du coupleur NxN. Un terminal radio T₂ est également disposé dans la pièce P2 et est apte à émettre un signal radio à destination du module radio Tx₂ et à recevoir un signal radio émis par le module radio Tx₂.

Il en est de même pour les modules radio Tx₄, Tx₅, Tx₆ qui sont respectivement connectés à une première extrémité des liaisons optique FO₄, FO₅, FO₆. Une deuxième extrémité des liaisons optiques FO₄, FO₅, FO₆ sont respectivement connectées à deux ports du coupleur NxN. Des terminaux radio T₄, T₅, T₆ sont respectivement disposés dans les pièces P4, P5, P6 dans lesquelles sont respectivement disposés les modules radio Tx₄, Tx₅, Tx₆.

Un terminal radio T₃ est disposé dans une troisième pièce P3. Un tel terminal radio T₃ comprend des moyens de gestion radio GR et un module radio Tx₃ connecté à une première extrémité d'une liaison optique FO₃. Une deuxième extrémité de la liaison optique FO₃ est connectée à deux ports du coupleur NxN. Un tel terminal radio T₃ est par exemple un équipement assurant l'interface entre le réseau R et un deuxième réseau I, tel qu'Internet. Dans un tel cas de figure l'équipement assurant l'interface est une passerelle domestique ou une passerelle d'entreprise selon que le réseau R est un réseau domestique ou un réseau d'entreprise.

En référence à la **figure 2****,** un module radio Txᵢ comprend des moyens d'émission/réception ER/RR d'un signal radio et des moyens de traitement optique 1 d'un signal radio Les moyens d'émission/réception ER/RR sont connectés respectivement à des moyens de réception d'une porteuse optique RO et à des moyens d'émission d'une porteuse optique EO. Les moyens d'émission optique EO sont connectés à une première fibre optique 11 constitutive d'une liaison optique FOᵢ. Les moyens de réception optique RO sont connectés une deuxième section de fibre optique 12 constitutive de la liaison optique FOᵢ. Les moyens d'émission/réception EO/RO sont compris dans les moyens de traitement optique 1.

Lorsque le signal radio est reçu par les moyens de réception radio RR du module radio Txᵢ, il est transmis aux moyens d'émission optique EO. Les moyens d'émission optique EO modulent une porteuse optique avec le signal radio reçu par les moyens de réception radio RR et destiné à être transmis au travers de la liaison optique FOᵢ. Une fois la porteuse optique modulée, elle est transmise au travers de la section de fibre optique 11. Lors de la modulation de la porteuse optique, les données constitutives du signal radio restent dans le format natif du signal radio.

Lorsqu'une porteuse optique est reçue par les moyens de réception optique RO, ces derniers démodulent la porteuse optique. Les données ainsi obtenues sont ensuite transmises aux moyens d'émission radio ER qui émettent alors un signal radio à destination du terminal radio Tₘ.

Dès lors que les moyens de réception radio RR détectent un signal radio, celui-ci est transmis à destination des moyens d'émission optiques EO et cela que le signal radio détecté soit un signal radio comprenant des données utiles ou bien un signal radio parasite ne contenant pas de données utiles. Les moyens d'émission optique EO modulent alors une porteuse optique avec les données comprises dans le signal radio reçu, puis la porteuse optique est transmise au travers de la section de fibre optique 11 à destination des différents modules radio Txᵢ appartenant au réseau R. A réception de la porteuse optique, les moyens de réception optique RO des différents modules radio Txᵢ du réseau R génèrent un signal radio émis par les moyens d'émission radio ER à destination des terminaux radio associés aux modules radio.

La transmission de signaux radio parasites au travers du réseau génère du bruit perturbant la transmission des signaux radio utiles et induit une perte en débit de transmission. Un tel état de fait impacte de manière négative la qualité de service au sein du réseau R.

Un des buts de l'invention est de remédier à des inconvénients de l'état de l'art.

A cette fin, l'invention propose un procédé de traitement d'une demande de transmission d'un signal radio émise par un terminal radio à destination d'un module de gestion radio, le module de gestion radio étant apte à autoriser le terminal radio à émettre le signal radio à destination d'un module radio associé au terminal radio comprenant des moyens de traitement optique aptes à moduler le signal radio reçu sur une porteuse optique et réciproquement, les moyens de traitement optique étant connectés à une extrémité d'une liaison optique au travers de laquelle le signal radio modulé sur la porteuse optique est destiné à être transmis.

Un tel procédé de communication comprend les étapes suivantes, mises en oeuvre par un module de gestion optique connecté au module de gestion radio :
- génération d'une demande d'activation des moyens de traitement optique du module radio associé au terminal au moyen de paramètres relatifs à la transmission compris dans la demande de transmission, les paramètres relatifs à la transmission étant transmis aux module de gestion optique par le module de gestion radio,
- émission, à destination d'au moins le module radio associé, de la demande d'activation des moyens de traitement optique.

Dans une telle solution le module de gestion optique est par exemple connecté à chaque module radio du réseau de communication au moyen de liaisons filaires dédiées ou bien au moyen de liaisons optiques appartenant au réseau de communication.

Dans la solution proposée, les moyens de traitement optique des différents modules radio sont activés par le module de gestion optique lorsque celui-ci a reçu une demande de transmission d'un signal radio transmise par le module de gestion radio.

La solution objet de l'invention permet par conséquent de commander des moyens d'émission/réception optique à partir de paramètres relatifs à la transmission de signaux radio.

Ainsi, les moyens de traitement optique des modules radio ne sont pas activés lorsque le module radio détecte un signal radio parasite contrairement à ce qui se fait dans l'état de l'art.

Une telle solution permet de réduire les bruits liés à la détection et à la transmission de signaux radio parasites par les modules radio appartenant au réseau et contribue ainsi à améliorer la qualité de service au sein du réseau.

Selon une caractéristique particulière, le procédé de traitement comprend une étape d'émission, à destination d'au moins le module radio associé, d'une demande de désactivation des moyens de traitement optique.

Une fois le signal radio transmis au travers de la liaison optique, les moyens de traitement optique sont désactivés empêchant ainsi la transmission de signaux radio parasites au travers du réseau de communication.

Selon une caractéristique particulière du procédé de traitement objet de l'invention, les paramètres relatifs à la transmission comprennent un identifiant du terminal émetteur du signal radio, une information relative à la durée de la transmission.

L'invention concerne également un procédé de transmission d'un signal radio par un module radio associé à un terminal radio, le terminal radio étant autorisé par un module de gestion radio à émettre le signal radio à destination du module radio, le module radio comprenant des moyens de traitement optique aptes à moduler le signal radio reçu sur une porteuse optique et réciproquement, les moyens de traitement optique étant connectés à une extrémité d'une liaison optique au travers de laquelle le signal radio modulé sur la porteuse optique est destiné à être transmis.

Un tel procédé de transmission comprend une étape de réception par le module radio d'une demande d'activation des moyens de traitement optique générée par un module de gestion optique connecté au module de gestion radio au moyen de paramètres relatifs à la transmission compris dans une demande de transmission émise par le terminal radio à destination du module de gestion radio.

Une telle solution permet une économie d'énergie. En effet, les moyens de traitement optique étant activés uniquement lorsqu'un signal radio comprenant des données utiles est destiné à être transmis, ils ne nécessitent pas une alimentation en énergie de manière continue comme c'est le cas dans l'état de l'art.

L'invention a également pour objet un module de gestion optique apte à traiter une demande de transmission d'un signal radio émise par un terminal radio à destination d'un module de gestion radio, le module de gestion radio étant apte à autoriser le terminal radio à émettre le signal radio à destination d'un module radio associé au terminal radio comprenant des moyens de traitement optique aptes à moduler le signal radio reçu sur une porteuse optique et réciproquement, les moyens de traitement optique étant connectés à une extrémité d'une liaison optique au travers de laquelle le signal radio modulé sur une porteuse optique est destiné à être transmis.

Un tel module de gestion optique étant connecté au module de gestion radio comprend :
- des moyens de génération d'une demande d'activation des moyens de traitement optique du module radio associé au terminai au moyen de paramètres relatifs à la transmission compris dans la demande de transmission, les paramètres relatifs à la transmission étant transmis aux module de gestion optique par le module de gestion radio,
- des moyens d'émission, à destination d'au moins le module radio associé, de la demande d'activation des moyens de traitement optique.

L'invention concerne également un module radio associé à un terminal radio, le terminal radio étant autorisé par un module de gestion radio à émettre le signal radio à destination du module radio, le module radio comprenant des moyens de traitement optique aptes à moduler le signal radio reçu sur une porteuse optique et réciproquement, les moyens de traitement optique étant connectés à une extrémité d'une liaison optique au travers de laquelle le signal radio modulé sur une porteuse optique est destiné à être transmis.

Un tel module radio comprend des moyens de réception d'une demande d'activation des moyens de traitement optique générée par un module de gestion optique connecté au module de gestion radio au moyen de paramètres relatifs à la transmission compris dans une demande de transmission émise par le terminal radio à destination du module de gestion radio.

L'invention a également pour objet un réseau de communication comprenant au moins un terminal radio apte à émettre une demande de transmission d'un signal radio à destination d'un module de gestion radio, le module de gestion radio étant apte à autoriser le terminal radio à émettre le signal radio à destination d'un module radio associé au terminal radio comprenant des moyens de traitement optique aptes à moduler le signal radio reçu sur une porteuse optique et réciproquement, les moyens de traitement optique étant connectés à une extrémité d'au moins une liaison optique au travers de laquelle le signal radio modulé sur la porteuse optique est destiné à être transmis.

Un tel réseau comprend un module de gestion optique connecté au module de gestion radio, le module de gestion optique comprenant :
- des moyens de génération d'une demande d'activation des moyens de traitement optique du module radio associé au terminal au moyen de paramètres relatifs à la transmission compris dans la demande de transmission, les paramètres relatifs à la transmission étant transmis aux module de gestion optique par le module de gestion radio,
- des moyens d'émission, à destination d'au moins le module radio associé, de la demande d'activation des moyens de traitement optique, et le module radio comprend des moyens de réception de la demande d'activation des moyens de traitement optique générée par le module de gestion optique.

Selon d'autres aspects, l'invention concerne également des programmes d'ordinateur comprenant des instructions de code de programme pour la mise en oeuvre des étapes des procédés de transmission et de traitement décrits précédemment, lorsque ces programmes sont exécutés par un ordinateur.

Chacun des programmes d'ordinateur décrits ci-dessus peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement lisible par un ordinateur sur lequel est enregistré un programme d'ordinateur tel que décrit précédemment.

Le support d'informations peut être n'importe quelle entité ou dispositif capable de stocker le programme. Par exemple, le support peut comporter un moyen de stockage, tel qu'une ROM (pour "*Read Only Memory*"), par exemple un CD ROM ou une ROM de circuit microélectronique, ou encore un moyen d'enregistrement magnétique, par exemple une disquette (*floppy disc*) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres caractéristiques et avantages apparaîtront à la lecture de modes de réalisation décrits en référence aux dessins dans lesquels :
- la figure 1 représente un réseau optique dans lequel un signal radio est transmis conformément à l'état de l'art,
- la figure 2 représente un module radio apte à mettre en oeuvre la technologie RoF,
- la figure 3 représente un réseau dans lequel un signal radio est transmis conformément à technologie RoF selon un premier mode de réalisation de l'invention,
- la figure 4 représente un réseau dans lequel un signal radio est transmis conformément à technologie RoF selon un deuxième mode de réalisation de l'invention
- la figure 5 représente un module radio apte à mettre en oeuvre la technologie RoF selon une première variante de réalisation de l'invention,
- la figure 6 représente un module de commande selon l'invention,
- la figure 7 représente les étapes d'un procédé de transmission d'un signal radio dans le réseau optique objet de l'invention,
- la figure 8 représente les étapes d'un procédé de traitement d'un signal radio par un module radio selon l'invention.

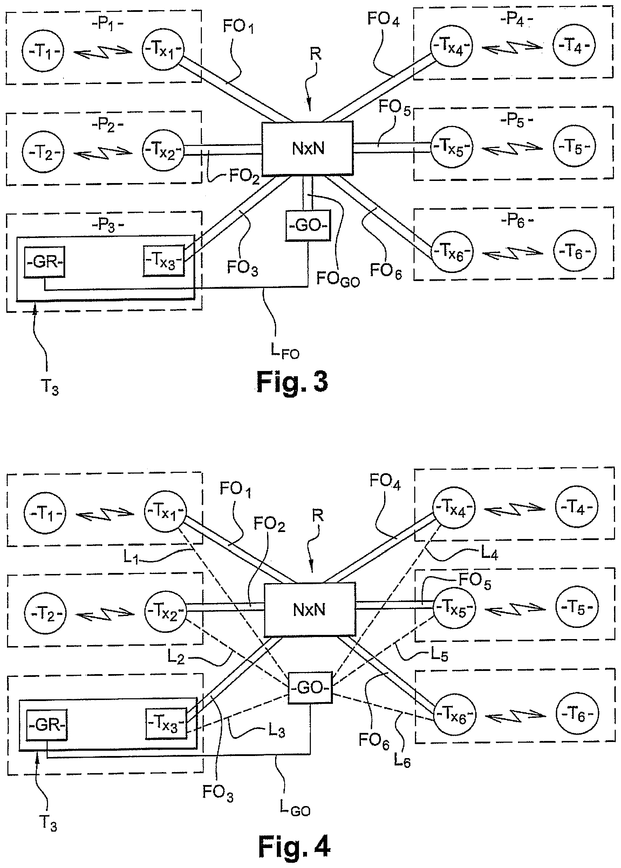

La **figure 3** représente un réseau optique privatif R, tel qu'un réseau domestique ou un réseau d'entreprise, selon un premier mode de réalisation de l'invention.

Dans un tel réseau R, un premier module radio Tx₁ est connecté à une première extrémité d'une liaison optique FO₁ comprenant deux sections de fibre optique, chacune des sections de fibre optique étant associée à un sens de transmission d'un signal optique afin de permettre une transmission bidirectionnelle des données. Un tel module radio Tx₁ est situé dans une première pièce P1 d'un local domestique ou professionnel. Une deuxième extrémité de la liaison optique FO₁ est connectée à deux ports d'un coupleur optique passif NxN, où par exemple N = 6 comme représenté à la figure 1. Un tel coupleur optique permet de sommer les différents signaux optiques qu'il reçoit puis de diffuser cette sommation à tous les équipements qui lui sont connectés. Un terminal radio T₁, tel qu'un ordinateur personnel, un terminal audio-visuel ou un téléphone de type « Smartphone » équipé de moyens d'émission/réception radio tels qu'un processeur ultra large bande UWB (*Ultra Wide Band*), est également disposé dans la pièce P1 et est apte à émettre un signal radio à destination du module radio Tx₁ et à recevoir un signal radio émis par le module radio Tx₁. Plusieurs terminaux radio Tₘ peuvent être connectés à un même module radio Txᵢ.

Un deuxième module radio Tx₂ est connecté à une première extrémité d'une liaison optique FO₂. Un tel module radio Tx₂ est situé dans une deuxième pièce P2 d'un local domestique ou professionnel. Une deuxième extrémité de la liaison optique FO₂ est connectée à deux ports du coupleur NxN. Un terminal radio T₂ est également disposé dans la pièce P2 et est apte à émettre un signal radio à destination du module radio Tx₂ et à recevoir un signal radio émis par le module radio Tx₂.

Il en est de même pour les modules radio Tx₄, Tx₅, Tx₆ qui sont respectivement connectés à une première extrémité des liaisons optiques FO₄, FO₅, FO₆. Une deuxième extrémité des liaisons optique FO₄, FO₅, FO₆ respectivement connectées à deux ports du coupleur NxN. Des terminaux radio T₄, T₅, T₆ sont respectivement disposés dans les pièces P4, P5, P6 dans lesquelles sont respectivement disposés les modules radio Tx₄, Tx₅, Tx₆.

Un terminal radio T₃ est disposé dans une troisième pièce P3. Un tel terminal radio T₃ comprend des moyens de gestion radio GR et un module radio Tx₃ connecté à une première extrémité d'une liaison optique FO₃. Une deuxième extrémité de la liaison optique FO₃ est connectée à deux ports du coupleur NxN. Un tel terminal radio T3 est par exemple un équipement assurant l'interface entre le réseau R et un deuxième réseau I, tel qu'Internet. Dans un tel cas de figure l'équipement assurant l'interface est une passerelle domestique ou une passerelle d'entreprise selon que le réseau R est un réseau domestique ou un réseau d'entreprise.

Lorsqu'un terminal radio Tₘ doit émettre un signal radio au travers du réseau R, une demande de transmission de données est émise par les moyens d'émission/réception radio du terminal radio à destination du module de gestion radio GR du terminal radio T₃ qui joue le rôle de coordinateur radio pour le réseau R.

Un module radio Txᵢ comprend des moyens d'émission/réception ER/RR d'un signal radio et des moyens de traitement optique 1 d'un signal radio. Les moyens d'émission/réception ER/RR sont connectés respectivement à des moyens de réception d'une porteuse optique RO et à des moyens d'émission d'une porteuse optique EO. Les moyens d'émission optique EO sont connectés à une section de fibre optique 11 constitutive de la liaison optique FOᵢ. Les moyens de réception optique RO sont connectés à une section de fibre optique 12 constitutive de la liaison optique FOᵢ.

Un module de gestion optique GO est connecté d'une part au coupleur NxN au moyen d'une liaison optique FO_{GO} et d'autre part au module de gestion radio GR au moyen d'une liaison dédiée L_{GO}. Une telle liaison L_{GO} est par exemple une paire de cuivre. Le module de gestion optique GO a pour fonction de transmettre à l'ensemble des modules radio Txᵢ, ou bien à certains d'entre eux, un signal de commande comprenant une demande d'activation des moyens de traitement optique EO/RO des modules radio Txᵢ. Dans un mode de réalisation particulier de l'invention, le module gestion optique GO émet également une demande de désactivation des moyens de traitement optique une fois que le signal radio à émettre a été traité. Les demandes d'activation et de désactivation sont générées par le module de gestion optique GO suite à la transmission par le module de gestion radio GR d'une demande de transmission d'un signal radio.

Une telle demande de transmission comprend des paramètres relatifs à la transmission du signal radio tels qu'un identifiant du terminal émetteur du signal radio, un identifiant d'au moins un terminal radio destinataire du signal radio, une information relative à la durée de.la transmission.

Ainsi, la solution objet de l'invention permet de commander des moyens d'émission/réception optique à partir de paramètres relatifs à la transmission de signaux radio.

La **figure 4** représente un réseau optique privatif R selon un deuxième mode de réalisation de l'invention. Les éléments constitutifs de ce réseau identiques à ceux décrits en référence à la figure 3 ne sont pas décrits de nouveau.

Dans un tel réseau R, le module de gestion optique GO est connecté à chaque module radio Txᵢ au moyen d'une liaison dédiée Lᵢ et peut ainsi transmettre à chacun des modules radio Txᵢ, un signal de commande comprenant une demande d'activation des moyens de traitement optique EO/RO des modules radio Txᵢ. Dans un mode de réalisation particulier de l'invention, le module de gestion optique GO émet également une demande de désactivation des moyens de traitement optique une fois que le signal radio à émettre a été traité.

Les liaisons Lᵢ peuvent être des liaisons optiques ou des liaisons cuivre. Lorsque les liaisons sont des liaisons cuivre, il est possible de télé-alimenter les modules radio.

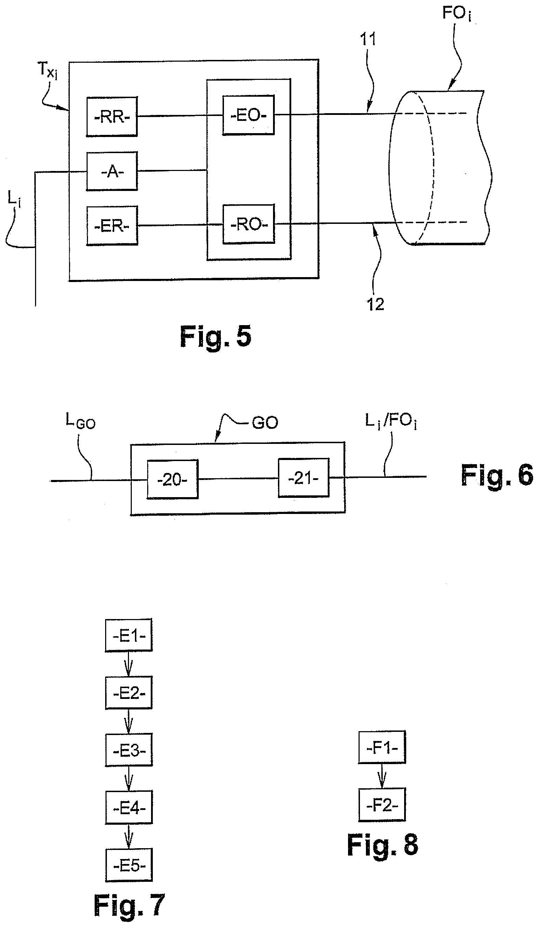

La **figure 5** représente un module radio Txᵢ selon l'invention. Le module radio Txᵢ comprend des moyens d'émission/réception ER/RR d'un signal radio et des moyens de traitement optique 1 d'un signal radio. Les moyens d'émission/réception ER/RR sont connectés respectivement à des moyens de réception d'une porteuse optique RO et à des moyens d'émission d'une porteuse optique EO. Les moyens d'émission optique EO sont connectés à une section de fibre optique 11 constitutive de la liaison optique FOᵢ. Les moyens de réception optique RO sont connectés à une section de fibre optique 12 constitutive de la liaison optique FOᵢ. Enfin, le module radio Txᵢ comprend des moyens d'activation A connectés au module de gestion optique GO. Les moyens d'activation A comprennent des moyens de réception d'une demande d'activation émise par le module de gestion optique GO. Dans un mode de réalisation de l'invention, les moyens de réception d'une demande d'activation sont également aptes à recevoir une demande de désactivation des moyens de traitement optique 1.

Un module de gestion optique GO est représenté à la **figure 6****.** Un tel module de gestion optique GO comprend des moyens de réception 20 d'une demande de transmission d'un signal radio émise par le terminal radio Tₘ et transmise par le module de gestion radio GR, et des moyens d'émission 21, à destination du module radio Txᵢ, d'une demande d'activation des moyens de traitement optique EO/RO du module radio Txᵢ.

Dans un mode réalisation particulier de l'invention, le module de gestion radio GR et le module de gestion optique GO sont compris dans un même dispositif de gestion. Un tel dispositif de gestion peut être, lui-même, compris dans le terminal radio T₃.

En référence à la **figure 7****,** au cours d'une étape E1, le module de gestion radio GR reçoit une demande de transmission d'un signal radio émise par un terminal radio Tₘ. Une telle demande de transmission comprend des paramètres relatifs à la transmission du signal radio tels qu'un identifiant du terminal émetteur du signal radio, un identifiant d'au moins un terminal radio destinataire du signal radio, une information relative à la durée de la transmission.

Au cours d'une étape E2, le module de gestion radio GR transmet cette demande de transmission au module de gestion optique GO au travers de la liaison L_{GO.}

A réception de la demande de transmission, le module de gestion optique GO extrait, au cours d'une étape E3, les paramètres relatifs à la transmission du signal radio. Au cours d'une étape E4, le module de gestion optique GO génère une demande d'activation des moyens de traitement optique du module radio associé au terminal Tₘ émetteur de la demande de transmission à partir des paramètres relatifs à la transmission et d'informations telles que l'association terminal radio Tₘ/module radio Txᵢ. Le module de gestion optique détermine, à partir des paramètres relatifs à la transmission du signal radio, l'identité du module radio Txᵢ associé au terminal radio Tₘ émetteur de la demande de transmission ainsi que sa localisation dans le réseau R, ainsi que la durée de la transmission.

Enfin, au cours d'une étape E4, le module de gestion optique émet la demande d'activation au module radio Txᵢ concerné.

Le module de gestion optique GO peut également, dans une variante de réalisation, générer une demande d'activation des moyens de traitement optique du module radio associé au terminal Tₙ à destination duquel le signal radio est émis. Pour ce faire, le module de gestion optique GO génère une telle demande d'activation à partir des paramètres relatifs à la transmission et d'informations telles que l'association terminal radio Tₙ/module radio Txⱼ. Le module de gestion optique détermine, à partir des paramètres relatifs à la transmission du signal radio, l'identité du module radio Txⱼ associé au terminal radio Tₙ ainsi que sa localisation dans le réseau R.

Dans une autre variante de réalisation de l'invention, le module de gestion optique GO génère également une demande de désactivation des moyens de traitement optique.

Dans une autre variante de réalisation, le module de gestion optique GO détermine, à partir des paramètres relatifs à la transmission du signal radio, la durée pendant laquelle les moyens de traitement optiques EO/RO doivent être activés. La demande d'activation des moyens de traitement optiques EO/RO comprend cette information. Ainsi, les moyens de traitement optique EO/RO sont activés pour une certaine durée au-delà de laquelle, ils sont désactivés.

En référence à la figure 8, au cours d'une étape F1, un module radio Txᵢ reçoit une demande d'activation des moyens de traitement optique EO/RO émise par le module de gestion optique GO suite à la réception par ce dernier d'une demande de transmission d'un signal radio.

Ainsi, à réception de la demande d'activation par les moyens d'activation A, ceux-ci activent les moyens de traitement optique EO/RO au cours d'une étape F2. Les moyens d'émission optique EO modulent alors une porteuse optique générée par un laser au moyen des données comprises dans le signal radio émis par le terminal radio dialoguant avec le module radio Txᵢ. La porteuse optique ainsi modulée est ensuite transmise dans le réseau R au travers de la section de fibre optique FOᵢ.

Dans une autre variante de réalisation de l'invention, les moyens d'activation A reçoivent une demande de désactivation des moyens de traitement optique EO/RO. Ainsi, à réception de la demande de désactivation par les moyens d'activation A, ceux-ci désactivent les moyens de traitement optique EO/RO.

## Revendications

1. Procédé de traitement d'une demande de transmission d'un signal radio émise par un terminal radio à destination d'un module de gestion radio, le module de gestion radio étant apte à autoriser le terminal radio à émettre le signal radio à destination d'un module radio associé au terminal radio, le module radio comprenant des moyens de traitement optique aptes à moduler le signal radio reçu sur une porteuse optique et réciproquement, les moyens de traitement optique étant connectés à une extrémité d'une liaison optique au travers de laquelle le signal radio modulé sur la porteuse optique est destiné à être transmis,
**caractérisé en ce que** le procédé comprend les étapes suivantes, mises en oeuvre par un module de gestion optique connecté au module de gestion radio :
- génération d'une demande d'activation des moyens de traitement optique du module radio associé au terminal au moyen de paramètres relatifs à la transmission compris dans la demande de transmission, les paramètres relatifs à la transmission étant transmis au module de gestion optique par le module de gestion radio,
- émission, à destination d'au moins le module radio associé, de la demande d'activation des moyens de traitement optique.

2. Procédé de traitement selon la revendication 1 comprenant une étape d'émission, à destination d'au moins le module radio associé, d'une demande de désactivation des moyens de traitement optique.

3. Procédé de traitement selon la revendication 1 dans lequel les paramètres relatifs à la transmission comprennent un identifiant du terminal émetteur du signal radio, une information relative à la durée de la transmission.

4. Procédé de transmission d'un signal radio par un module radio associé à un terminal radio, le terminal radio étant autorisé par un module de gestion radio à émettre le signal radio à destination du module radio, le module radio comprenant des moyens de traitement optique aptes à moduler le signal radio reçu sur une porteuse optique et réciproquement, les moyens de traitement optique étant connectés à une extrémité d'une liaison optique au travers de laquelle le signal radio modulé sur la porteuse optique est destiné à être transmis,
**caractérisé en ce que** le procédé comprend une étape de réception par le module radio d'une demande d'activation des moyens de traitement optique générée par un module de gestion optique connecté au module de gestion radio au moyen de paramètres relatifs à la transmission compris dans une demande de transmission émise par le terminal radio à destination du module de gestion radio.

5. Module de gestion optique apte à traiter une demande de transmission d'un signal radio émise par un terminal radio associé à un module radio comprenant des moyens de traitement optique aptes à moduler le signal radio reçu sur une porteuse optique et réciproquement, les moyens de traitement optique étant connectés à une extrémité d'une liaison optique au travers de laquelle le signal radio modulé sur la porteuse optique est destiné à être transmis,
**caractérisé en ce que** le module de gestion optique comprend :
- des moyens de génération d'une demande d'activation des moyens de traitement optique du module radio associé au terminal au moyen de paramètres relatifs à la transmission compris dans la demande de transmission,
- des moyens d'émission, à destination d'au moins le module radio associé, de la demande d'activation des moyens de traitement optique.

6. Module radio associé à un terminal radio, le module radio étant apte à recevoir le signal radio en provenance du terminal radio, le module radio comprenant des moyens de traitement optique aptes à moduler le signal radio reçu sur une porteuse optique et réciproquement, les moyens de traitement optique étant connectés à une extrémité d'une liaison optique au travers de laquelle le signal radio modulé sur la porteuse optique est destiné à être transmis,
**caractérisé en ce que** le module radio comprend des moyens de réception d'une demande d'activation des moyens de traitement optique générée par un module de gestion optique au moyen de paramètres relatifs à la transmission compris dans une demande de transmission émise par le terminal radio.

7. Réseau de communication comprenant au moins un terminal radio apte à émettre une demande de transmission d'un signal radio à destination d'un module de gestion radio, le module de gestion radio autorisant le terminal radio à émettre le signal radio à destination d'un module radio associé au terminal radio comprenant des moyens de traitement optique aptes à moduler le signal radio reçu sur une porteuse optique et réciproquement, les moyens de traitement optique étant connectés à une extrémité d'au moins une liaison optique au travers de laquelle le signal radio est destiné à être transmis,
**caractérisé en ce que** le réseau comprend un module de gestion optique connecté au module de gestion radio, le module de gestion optique comprenant:
- des moyens de génération d'une demande d'activation des moyens de traitement optique du module radio associé au terminal au moyen de paramètres relatifs à la transmission compris dans la demande de transmission, les paramètres relatifs à la transmission étant transmis au module de gestion optique par le module de gestion radio,
- des moyens d'émission, à destination d'au moins le module radio associé, de la demande d'activation des moyens de traitement optique, et en que le module radio comprend des moyens de réception de la demande d'activation des moyens de traitement optique générée par le module de gestion optique.

8. Programme d'ordinateur comprenant des instructions de code de programme pour la mise en oeuvre des étapes du procédé de traitement selon la revendication 1 lorsque le programme est exécuté par un processeur.

9. Support d'enregistrement lisible par un équipement commutateur sur lequel est enregistré le programme selon la revendication 8.

10. Programme d'ordinateur comprenant des instructions de code de programme pour la mise en oeuvre des étapes du procédé de transmission selon la revendication 4 lorsque le programme est exécuté par un processeur.

11. Support d'enregistrement lisible par un équipement commutateur sur lequel est enregistré le programme selon la revendication 10.

## Patentansprüche

1. Verfahren zur Verarbeitung einer von einem Funkendgerät an ein Funksteuerungsmodul gesendeten Anforderung zur Übertragung eines Funksignals, wobei das Funksteuerungsmodul geeignet ist, das Funkendgerät zu autorisieren, das Funksignal an ein dem Funkendgerät zugeordnetes Funkmodul zu senden, wobei das Funkmodul optische Verarbeitungsmittel umfasst, die geeignet sind, das empfangene Funksignal auf einem optischen Träger zu modulieren, und umgekehrt, wobei die optischen Verarbeitungsmittel mit einem Ende einer optischen Verbindung verbunden sind, über welche das auf dem optischen Träger modulierte Funksignal übertragen werden soll,
**dadurch gekennzeichnet, dass** das Verfahren die folgenden Schritte, die von einem mit dem Funksteuerungsmodul verbundenen optischen Steuerungsmodul durchgeführt werden, umfasst:
- Erzeugen einer Anforderung zur Aktivierung der optischen Verarbeitungsmittel des dem Endgerät zugeordneten Funkmoduls mithilfe von die Übertragung betreffenden Parametern, die in der Anforderung zur Übertragung enthalten sind, wobei die die Übertragung betreffenden Parameter von dem Funksteuerungsmodul an das optische Steuerungsmodul gesendet werden,
- Senden, wenigstens an das zugeordnete Funkmodul, der Anforderung zur Aktivierung der optischen Verarbeitungsmittel.

2. Verfahren zur Verarbeitung nach Anspruch 1, welches einen Schritt des Sendens, wenigstens an das zugeordnete Funkmodul, einer Anforderung zur Deaktivierung der optischen Verarbeitungsmittel umfasst.

3. Verfahren zur Verarbeitung nach Anspruch 1, wobei die die Übertragung betreffenden Parameter eine Kennung des Endgeräts, welches das Funksignal sendet, und eine Information bezüglich der Dauer der Übertragung umfassen.

4. Verfahren zur Übertragung eines Funksignals durch ein einem Funkendgerät zugeordnetes Funkmodul, wobei das Funkendgerät von einem Funksteuerungsmodul autorisiert wird, das Funksignal an das Funkmodul zu senden, wobei das Funkmodul optische Verarbeitungsmittel umfasst, die geeignet sind, das empfangene Funksignal auf einem optischen Träger zu modulieren, und umgekehrt, wobei die optischen Verarbeitungsmittel mit einem Ende einer optischen Verbindung verbunden sind, über welche das auf dem optischen Träger modulierte Funksignal übertragen werden soll,
**dadurch gekennzeichnet, dass** das Verfahren einen Schritt des Empfangens, durch das Funkmodul, einer von einem mit dem Funksteuerungsmodul verbundenen optischen Steuerungsmodul erzeugten Anforderung zur Aktivierung der optischen Verarbeitungsmittel mithilfe von die Übertragung betreffenden Parametern, die in einer von dem Funkendgerät an das Funksteuerungsmodul gesendeten Anforderung zur Übertragung enthalten sind, umfasst.

5. Optisches Steuerungsmodul, welches geeignet ist, eine Anforderung zur Übertragung eines Funksignals zu verarbeiten, die von einem Funkendgerät gesendet wird, das einem Funkmodul zugeordnet ist, welches optische Verarbeitungsmittel umfasst, die geeignet sind, das empfangene Funksignal auf einem optischen Träger zu modulieren, und umgekehrt, wobei die optischen Verarbeitungsmittel mit einem Ende einer optischen Verbindung verbunden sind, über welche das auf dem optischen Träger modulierte Funksignal übertragen werden soll, **dadurch gekennzeichnet, dass** das optische Steuerungsmodul umfasst:
- Mittel zur Erzeugung einer Anforderung zur Aktivierung der optischen Verarbeitungsmittel des dem Endgerät zugeordneten Funkmoduls mithilfe von die Übertragung betreffenden Parametern, die in der Anforderung zur Übertragung enthalten sind,
- Mittel zum Senden, wenigstens an das zugeordnete Funkmodul, der Anforderung zur Aktivierung der optischen Verarbeitungsmittel.

6. Funkmodul, welches einem Funkendgerät zugeordnet ist, wobei das Funkmodul geeignet ist, das von dem Funkendgerät stammende Funksignal zu empfangen, wobei das Funkmodul optische Verarbeitungsmittel umfasst, die geeignet sind, das empfangene Funksignal auf einem optischen Träger zu modulieren, und umgekehrt, wobei die optischen Verarbeitungsmittel mit einem Ende einer optischen Verbindung verbunden sind, über welche das auf dem optischen Träger modulierte Funksignal übertragen werden soll,
**dadurch gekennzeichnet, dass** das Funkmodul Mittel zum Empfang einer von einem optischen Steuerungsmodul erzeugten Anforderung zur Aktivierung der optischen Verarbeitungsmittel mithilfe von die Übertragung betreffenden Parametern, die in einer von dem Funkendgerät gesendeten Anforderung zur Übertragung enthalten sind, umfasst.

7. Kommunikationsnetz, welches wenigstens ein Funkendgerät umfasst, das geeignet ist, eine Anforderung zur Übertragung eines Funksignals an ein Funksteuerungsmodul zu senden, wobei das Funksteuerungsmodul das Funkendgerät autorisiert, das Funksignal an ein dem Funkendgerät zugeordnetes Funkmodul zu senden, welches optische Verarbeitungsmittel umfasst, die geeignet sind, das empfangene Funksignal auf einem optischen Träger zu modulieren, und umgekehrt, wobei die optischen Verarbeitungsmittel mit einem Ende wenigstens einer optischen Verbindung verbunden sind, über welche das Funksignal übertragen werden soll,
**dadurch gekennzeichnet, dass** das Netz ein optisches Steuerungsmodul umfasst, wobei das optische Steuerungsmodul mit dem Funksteuerungsmodul verbunden ist, wobei das optische Steuerungsmodul umfasst:
- Mittel zur Erzeugung einer Anforderung zur Aktivierung der optischen Verarbeitungsmittel des dem Endgerät zugeordneten Funkmoduls mithilfe von die Übertragung betreffenden Parametern, die in der Anforderung zur Übertragung enthalten sind, wobei die die Übertragung betreffenden Parameter von dem Funksteuerungsmodul an das optische Steuerungsmodul gesendet werden,
- Mittel zum Senden, wenigstens an das zugeordnete Funkmodul, der Anforderung zur Aktivierung der optischen Verarbeitungsmittel,
und dadurch, dass das Funkmodul Mittel zum Empfang der von dem optischen Steuerungsmodul erzeugten Anforderung zur Aktivierung der optischen Verarbeitungsmittel umfasst.

8. Computerprogramm, welches Programmcodeanweisungen zur Durchführung der Schritte des Verfahrens zur Verarbeitung nach Anspruch 1, wenn das Programm von einem Prozessor ausgeführt wird, umfasst.

9. Aufzeichnungsmedium, das für eine Vermittlungsvorrichtung lesbar ist und auf dem das Programm nach Anspruch 8 aufgezeichnet ist.

10. Computerprogramm, welches Programmcodeanweisungen zur Durchführung der Schritte des Verfahrens zur Übertragung nach Anspruch 4, wenn das Programm von einem Prozessor ausgeführt wird, umfasst.

11. Aufzeichnungsmedium, das für eine Vermittlungsvorrichtung lesbar ist und auf dem das Programm nach Anspruch 10 aufgezeichnet ist.

## Claims

1. Method for processing a request to transmit a radio signal emitted by a radio terminal to a radio management module, the radio management module being capable of authorizing the radio terminal to emit the radio signal to a radio module associated with the radio terminal, the radio module comprising optical processing means capable of modulating the radio signal received on an optical carrier and vice versa, the optical processing means being connected to one end of an optical link via which the radio signal modulated on the optical carrier is intended to be transmitted,
**characterized in that** the method comprise the following steps, applied by an optical management module connected to the radio management module:
- generation of an activation request to activate the optical processing means of the radio module associated with the terminal by means of transmission-related parameters included in the transmission request, the transmission-related parameters being transmitted to the optical management module by the radio management module,
- emitting, to at least the associated radio module, the activation request to activate the optical processing means.

2. Processing method according to Claim 1, comprising a step of emitting, to at least the associated radio module, a deactivation request to deactivate the optical transmission means.

3. Processing method according to Claim 1, wherein the transmission-related parameters comprise an identifier of the terminal emitting the radio signal, an item of information relating to the duration of the transmission.

4. Method for the transmission of a radio signal by a radio module associated with a radio terminal, the radio terminal being authorized by a radio management module to emit the radio signal to the radio module, the radio module comprising optical processing means capable of modulating the radio signal received on an optical carrier and vice versa, the optical processing means being connected to one end of an optical link via which the radio signal modulated on the optical carrier is intended to be transmitted,
**characterized in that** the method comprises a step of reception by the radio module of an activation request to activate the optical processing means, said request being generated by an optical management module connected to the radio management module by means of transmission-related parameters included in a transmission request emitted by the radio terminal to the radio management module.

5. Optical management module capable of processing a request to transmit a radio signal emitted by a radio terminal associated with a radio module comprising optical processing means capable of modulating the radio signal received on an optical carrier and vice versa, the optical processing means being connected to one end of an optical link via which the radio signal modulated on the optical carrier is intended to be transmitted,
**characterized in that** the optical management module comprises:
- means for generating an activation request to activate the optical processing means of the radio module associated with the terminal by means of transmission-related parameters included in the transmission request,
- means for emitting, to at least the associated radio module, the activation request to activate the optical processing means.

6. Radio module associated with a radio terminal, the radio module being capable of receiving the radio signal from the radio terminal, the radio module comprising optical processing means capable of modulating the radio signal received on an optical carrier and vice versa, the optical processing means being connected to one end of an optical link via which the radio signal modulated on the optical carrier is intended to be transmitted,
**characterized in that** the radio module comprises means for receiving an activation request to activate the optical processing means, said request being generated by an optical management module by means of transmission-related parameters included in a transmission request emitted by the radio terminal.

7. Communication network comprising at least one radio terminal capable of emitting a request to transmit a radio signal to a radio management module, the radio management module authorizing the radio terminal to emit the radio signal to a radio module associated with the radio terminal comprising optical processing means capable of modulating the radio signal received on an optical carrier and vice versa, the optical processing means being connected to one end of at least one optical link via which the radio signal is intended to be transmitted,
**characterized in that** the network comprises an optical management module connected to the radio management module, the optical management module comprising:
- means for generating an activation request to activate the optical processing means of the radio module associated with the terminal by means of transmission-related parameters included in the transmission request, the transmission-related parameters being transmitted to the optical management module by the radio management module,
- means for emitting, to at least the associated radio module, the activation request to activate the optical processing means, and **in that** the radio module comprises means for receiving the activation request to activate the optical processing means, said request being generated by the optical management module.

8. Computer program comprising program-code instructions for the application of the steps of the processing method according to Claim 1 when the program is executed by a processor.

9. Recording medium that can be read by an item of commutator equipment on which the program according to Claim 8 is recorded.

10. Computer program comprising program-code instructions for the application of the steps of the transmission method according to Claim 4 when the program is executed by a processor.

11. Recording medium that can be read by an item of commutator equipment on which the program according to Claim 10 is recorded.
